# FASCICULE DE BREVET EUROPEEN

(11) **EP 3 183 479 B1**
(45) Date de publication et mention de la délivrance du brevet: **10.10.2018**
(21) Numéro de dépôt: 15753114.6
(22) Date de dépôt: 17.07.2015
(51) Int. Cl.: F16H 61/32, F16H 63/18

(54) **BOÎTE DE VITESSES POUR VÉHICULE AUTOMOBILE**
KRAFTFAHRZEUGGETRIEBE
MOTOR VEHICLE GEARBOX

(30) Priorité: 22.08.2014 FR 1457933
(43) Date de publication de la demande: 28.06.2017
(73) Titulaire: Technoboost, 75116 Paris (FR)
(72) Inventeur: DESCHAMPS, Alexandre, F-78530 Buc (FR); SCHAEFFER, Eric, F-75013 Paris (FR)
(74) Mandataire: Rosenberg, Muriel Sylvie
(86) Numéro de dépôt international: PCT/FR2015/051963
(87) Numéro de publication internationale: WO 2016/027017

(56) Documents cités:
- DE-A1-102006 030 995
- FR-A1- 2 905 437
- US-A1- 2009 108 791

## Description

L'invention porte sur une boîte de vitesses à barillet de commande, un procédé d'initialisation relatif à une telle boîte de vitesses, et un programme informatique permettant de mettre en oeuvre le procédé d'initialisation.

Une boîte de vitesses comprend un arbre sur lequel sont montés des pignons libres. Cet arbre est qualifié d'arbre secondaire, par opposition à l'arbre primaire qui porte des pignons fixes. Chaque pignon libre définit avec un pignon fixe un rapport de vitesses.

Les pignons libres sont en rotation libre vis-à-vis de l'arbre secondaire correspondant sauf quand un crabot et un synchroniseur viennent solidariser l'un des pignons avec l'arbre pour enclencher le rapport de vitesses correspondant. Le synchroniseur est couramment actionné par une fourchette mobile en translation. L'ensemble formé par les crabots, le synchroniseur et la fourchette constitue un moyen de couplage de l'arbre et du pignon.

Le mouvement de translation de la fourchette lui est donné, dans les systèmes qui nous intéressent ici, par un barillet de commande mobile en rotation. La transformation de la rotation du barillet en translation de la fourchette est opérée à l'aide d'une piste portée par le barillet, qui est orientée pour produire un effet de came (ou effet de rampe). La piste du barillet interagit avec un téton d'actionnement (ou crosse de commande) solidaire de la fourchette.

Dans les systèmes connus, lors du démarrage du moteur, la position angulaire du barillet de commande est généralement inconnue. Il est nécessaire d'initialiser cette position, en actionnant le barillet en rotation et en recherchant un point de repère.

Le point de repère peut par exemple être le contact entre une butée de fond de piste et le téton guidé par la piste.

Cette solution n'est pas utilisable si le barillet est un barillet ne disposant d'aucune butée sur ses pistes, comme c'est le cas de certains barillets de commande de boîte de vitesses de véhicules hybrides électriques ou hybrides hydrauliques.

Une autre solution consiste à utiliser un capteur de position angulaire absolue, monté sur l'axe de rotation du barillet, comme cela est divulgué dans le document FR2905437, divulguant toutes les caractéristiques du préambule des revendications 1 et 10, mais cette solution est coûteuse, encombrante et compliquée à mettre en oeuvre.

L'invention vise à résoudre ces problèmes et propose une boîte de vitesses pour véhicule automobile comprenant au moins un moyen de couplage pour coupler un arbre à un pignon monté autour dudit arbre, ledit moyen de couplage étant mobile en translation, un barillet de commande mobile en rotation pour commander la translation dudit moyen de couplage, et un moyen de suivi de la rotation du barillet, ledit moyen de suivi de la rotation du barillet étant configuré pour assurer un suivi en position angulaire, caractérisé en ce que la boîte comprend un moyen de commande pour commander une rotation rapide du barillet dans un premier sens jusqu'à ce que le barillet dépasse, ou rejoigne et dépasse, une position angulaire prédéterminée, puis une rotation lente du barillet en sens opposé au premier sens jusqu'à une constatation du fait que le barillet est à ladite position angulaire prédéterminée, pour initialiser ledit suivi en position angulaire sur la base d'au moins ladite constatation.

Grâce aux caractéristiques de l'invention, la boîte de vitesses est en mesure d'initialiser son suivi angulaire du barillet de manière rapide et précise au démarrage ou à l'allumage, ou après toute perte du suivi angulaire, avec des dispositifs simples et faciles à mettre en oeuvre.

Dans certains modes de réalisation, le barillet est sans butée sur chacune de ses pistes de commande, ce qui est avantageux pour le pilotage dans le cas d'une transmission hybride.

Avantageusement, le moyen de commande est de plus configuré pour commander, après ladite constatation, qui est alors une première constatation, un dépassement de ladite position angulaire dans ledit sens opposé, puis une deuxième rotation lente du barillet, la deuxième rotation lente étant effectuée dans ledit premier sens jusqu'à une deuxième constatation du fait que le barillet est à ladite position angulaire prédéterminée, pour initialiser ledit suivi en position angulaire sur la base au moins des première et deuxième constatations.

Grâce à une telle prise en compte de deux constatations, on bénéficie d'une grande précision dans l'initialisation du suivi angulaire.

La boîte de vitesses peut de plus comprendre
- un capteur et un témoin placé sur une section du barillet, le capteur repérant le témoin pour constater si le barillet de commande est à ladite position angulaire prédéterminée, ladite constatation ou première constatation du fait que le barillet est à ladite position angulaire prédéterminée étant effectuée à l'aide du capteur et du témoin,
   ∘ le capteur peut être un capteur tout ou rien,
   ∘ le capteur peut être fixe vis-à-vis d'un carter de la boîte,
   ∘ l'initialisation du suivi peut être effectuée sur la base de l'apparition d'un signal de détection par le capteur, ce qui permet de gagner un peu de temps dans le processus d'initialisation, ou alternativement sur la base de la disparition d'un signal de détection par le capteur.

La boîte de vitesses peut aussi comprendre
- un actionneur pour actionner le barillet en rotation, le moyen de suivi de la rotation du barillet comprenant un moyen de suivi du déplacement angulaire dans ledit actionneur,
- un moyen de démultiplication entre un actionneur en rotation pour actionner le barillet en rotation et le barillet,
- et/ou un moyen de contrôle électronique d'un actionneur du barillet.

L'invention propose aussi un procédé d'initialisation d'un suivi de déplacement angulaire d'un barillet de commande de boîte de vitesses pour véhicule automobile, la boîte comprenant un moyen de couplage pour coupler un arbre à un pignon monté autour dudit arbre, ledit moyen de couplage étant mobile en translation, un barillet de commande mobile en rotation pour commander la translation dudit moyen de couplage, et un moyen de suivi de la rotation du barillet, **caractérisé en ce que** le procédé comprend une commande en rotation rapide du barillet dans un premier sens jusqu'à ce que le barillet dépasse, ou atteigne et dépasse, une position angulaire prédéterminée, puis une commande en rotation lente du barillet en sens inverse jusqu'à une constatation du fait que le barillet est à ladite position angulaire prédéterminée, pour initialiser un suivi en position angulaire sur la base d'au moins ladite constatation.

L'invention propose aussi un programme informatique, qui quand il est mis en oeuvre par un processeur (900) conduit à la mise en oeuvre des étapes du procédé selon l'invention.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 présente un barillet de commande de boîte de vitesses par exemple pour véhicule hybride ;
- la figure 2 présente un système de couplage de l'arbre et des pignons d'une boîte de vitesses comprenant un barillet de commande;
- la figure 3 présente, en vue de côté, le système de couplage, avec un aspect des moyens de suivi de l'invention conformément à un mode de réalisation de l'invention.
- la figure 4 présente un exemple de mise en oeuvre de l'invention.

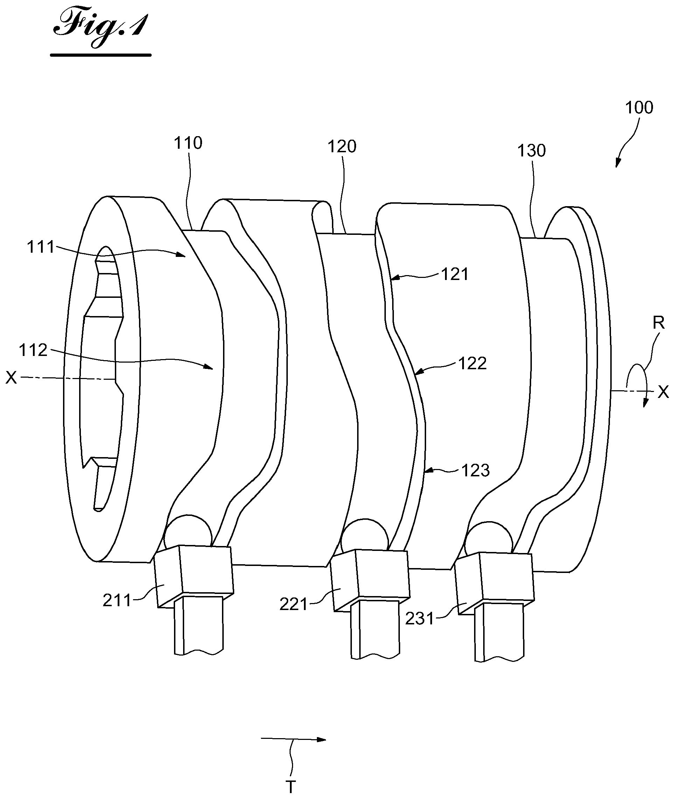

En **figure 1**, on a représenté un barillet de commande 100 de boîte de vitesses de véhicule automobile. Il s'agit d'une pièce de forme générale cylindrique, de section circulaire et d'axe X-X, et dont la surface circonférentielle externe porte des pistes, ici au nombre de trois, référencées 110, 120 et 130. Ces pistes, qui peuvent avoir un profil transversal en U, sont par exemple le résultat d'un usinage de la matière du barillet, et s'étendent globalement sur une circonférence de celui-ci. Elles sont constituées de différentes sections se succédant sur des secteurs angulaires successifs. Certaines sections s'étendent dans un plan perpendiculaire à l'axe du barillet, alors que d'autres sections (rampes) s'étendent dans un plan incliné par rapport à l'axe du barillet.

Le barillet 100 peut être animé, par rapport au carter de la boîte de vitesses, d'un mouvement de rotation R autour de l'axe X-X, du fait de l'action d'un moteur électrique, par exemple. Chacune des pistes 110, 120, 130 constitue alors un guide pour un téton d'actionnement (ou crosse de commande) de fourchette correspondant. Les fourchettes ne sont pas représentées en figure 1, mais on y distingue le téton 211 qui est guidé dans la piste 110, le téton 221 qui est guidé dans la piste 120 et le téton 231 qui est guidé dans la piste 130.

Ainsi, trois fourchettes sont commandées par le barillet 100. Néanmoins, le barillet 100 pourrait ne commander que deux fourchettes, ou, au contraire, commander un plus grand nombre de fourchettes. Le barillet sert à commander une séquence de passage de rapports de vitesses.

En fonction de sa position en rotation, le barillet 100 va amener le téton 211 dans différentes sections de la piste 110. Deux sections de la piste 110 sont visibles en figure 1. La section 111 est une section dans un plan incliné par rapport à l'axe de rotation du barillet 100, et le guidage du téton 211 dans cette section 110 en rotation impose, par un effet de came (effet de rampe), une translation par rapport au carter de la boîte de vitesses dans une direction T parallèle à l'axe X-X, au téton 211 et à la fourchette que celui-ci commande. Par contre, quand, du fait d'une rotation supplémentaire du barillet 100 autour de son axe, le téton 211 parvient dans la section 112 de la piste 110, celle-ci étant dans un plan perpendiculaire à l'axe du barillet 100, la rotation de celui-ci n'entraîne plus en translation le téton 211 et la fourchette associée.

Le téton 221 est guidé par la piste 120. Trois sections 121, 122 et 123 de la piste 120 sont visibles sur la figure 1. La rotation du barillet 100 amène successivement le téton 221 dans chacune de ces sections de la piste 120. Les sections 121 et 123 étant dans deux plans perpendiculaires à l'axe de rotation du barillet 100, quand le téton 221 se situe dans l'une ou l'autre de ces sections, la rotation du barillet 100 ne lui impose aucun mouvement de translation. A l'inverse, la section 122 étant dans un plan incliné par rapport à l'axe de rotation du barillet 100, par un effet de came, quand le téton 221 est dans la section 122, la rotation du barillet 100 entraîne une translation du téton 221.

De manière remarquable, les trois pistes 110, 120 et 130 du barillet 100 sont ininterrompues sur le tour complet de la circonférence du barillet, et sont donc des pistes sans fin.

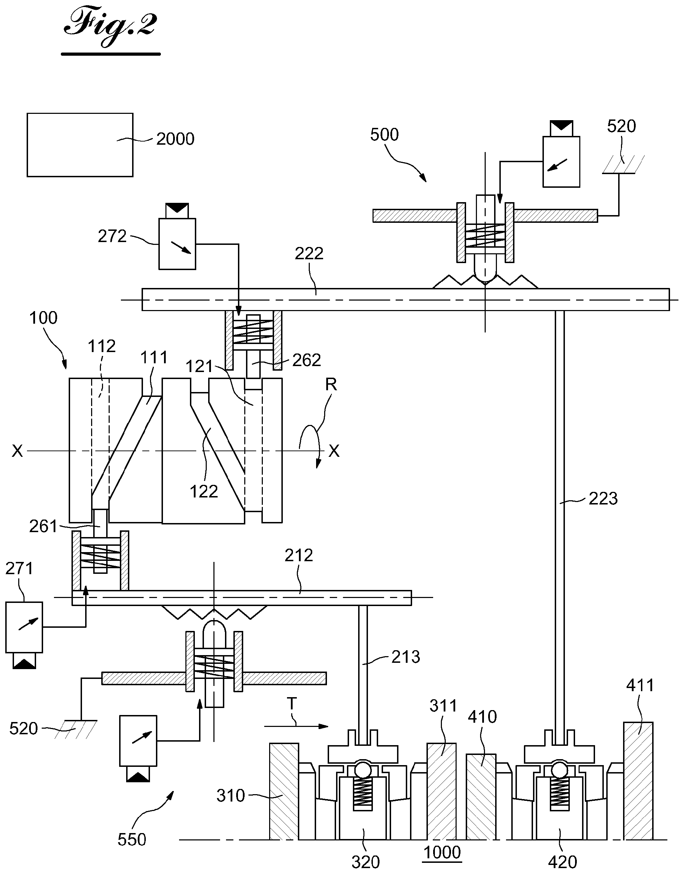

En **figure 2**, un barillet 100 à deux pistes est représenté. On a également fait figurer les fourchettes qu'il commande, ainsi que les pignons finalement couplés à l'arbre par l'action du barillet de commande.

On retrouve, comme en figure 1, une première piste sur le barillet 100, constituée d'une section 111 induisant un effet de came et une section 112 n'induisant pas d'effet de came. On retrouve également une deuxième piste comprenant une section à effet de came 122 et une section sans effet de came 121. Les tétons 261 et 262 (ou crosses de commande) sont guidés par les deux pistes, respectivement. Ils commandent des fourchettes 213 et 223, respectivement par l'intermédiaire d'axes de fourchette 212 et 222.

Les axes de fourchette 212 et 222 sont des pièces allongées parallèlement à l'axe X-X de rotation du barillet et sur lesquelles sont fixés à distance l'un de l'autre le téton correspondant, et les becs de fourchette correspondants.

Chacune des fourchettes 213 et 223 comporte deux becs dont les extrémités constituent des faces d'appui axiales pour agir par un appui suivant une direction parallèle à l'axe X-X sur des manchons de synchronisation d'un synchroniseur 320, respectivement 420.

Les synchroniseurs 320 et 420 ont pour fonction de coupler, ou de découpler, des pignons 310, 311 ou respectivement 410, 411, définissant des rapports de vitesses, avec un arbre secondaire 1000 de la boîte de vitesses.

L'arbre 1000 de la boîte de vitesses est parallèle à l'axe X-X de rotation du barillet 100, et également à l'axe de fourchette 212, respectivement 222.

Ainsi, un mouvement de rotation R du barillet 100 autour de son axe de rotation X-X provoque, quand un téton est engagé dans une section à effet de came de la piste correspondante, une translation T de la fourchette correspondante, l'actionnement du (ou d'un des deux) synchroniseur(s) que celle-ci commande et l'enclenchement d'un rapport de vitesses.

On précise que le barillet 100 représenté est en mesure de commander deux fourchettes et que l'invention s'applique naturellement à un barillet pouvant commander un autre nombre de fourchettes.

Le téton 261 (ou crosse de commande, éventuellement rétractable, ou encore billage), agissant dans une direction perpendiculaire à l'axe de fourchette 212, a une extrémité (sa bille) qui est insérée dans la piste correspondante du barillet 100 et éventuellement maintenue contre celle-ci par un ressort en compression du téton 261.

Ainsi, le téton 261 couple en mouvement le barillet 100 et la fourchette 213. De plus il peut maintenir en position la fourchette 213 et son axe 212, par contact avec les parois de la piste du barillet 100.

Le ressort du téton 261 peut éventuellement être piloté pour que l'ensemble du téton 261 s'efface, découplant le barillet 100 et la fourchette 213, les mouvements de l'un n'entrainant alors plus de mouvement de l'autre.

L'axe de fourchette 222 porte, de la même manière, un téton 262 qui insère son extrémité dans la piste correspondante du barillet 100 et couple en mouvement le barillet et la fourchette 223.

Le téton 261 est représenté engagé dans la piste correspondante du barillet, et le téton 262 est représenté désengagé de la piste correspondante.

Pour stabiliser les fourchettes 213 et 223, la boîte de vitesses selon l'invention peut comprendre de plus des systèmes de stabilisation 550 et 500 (ou moyens de stabilisation), montés pour stabiliser les ensembles composés d'une part du téton 261, de l'axe 212 et de la fourchette 213, et d'autre part du téton 262, de l'axe 222 et de la fourchette 223, et diminuer leurs possibilités de mouvement, quand le téton 261 ou 262 correspondant est rétracté.

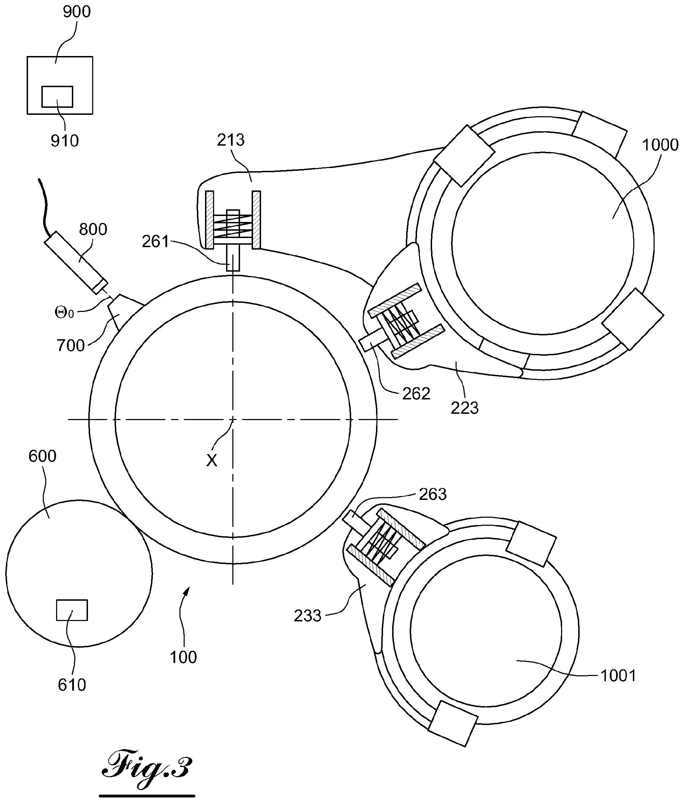

Dans le cadre d'une boîte possédant deux arbres secondaires 1000 et 1001, les fourchettes peuvent avoir la disposition représentée en **figure 3** autour du barillet 100, représenté dans un plan perpendiculaire à son axe. Les tétons 261, 262 et 263 sont par exemple disposés en des secteurs angulaires distincts et éloignés les uns des autres autour du barillet. Les fourchettes 213 et 223, qui sont entrainées par les tétons 261 et 262 agissent sur des pignons libres coopérant avec l'arbre 1000, alors que la fourchette 233, entrainée par le billage 263 agit sur des pignons libres coopérant avec l'arbre 1001. Les fourchettes 213 et 223 sont décalées l'une par rapport à l'autre angulairement autour de l'arbre 1000.

D'autres implantations des fourchettes sur un ou deux arbres secondaires sont compatibles avec l'invention.

Les tétons 261, 262 et 263 peuvent être rétractables comme cela a été présenté en relation avec la figure 2, ou ne pas l'être.

Le barillet 100 est entrainé en rotation par un moteur de commande de barillet ou actionneur 600, comme par exemple un moteur électrique sans balais, et qui comprend un capteur 610 de suivi du déplacement angulaire du barillet, qui mesure de manière continue le déplacement angulaire, et incrémente de manière continue, en conséquence, le contenu d'une mémoire 910. Un démultiplicateur est présent entre l'actionneur 600 et le barillet 100.

Le barillet 100 porte sur sa circonférence, en un secteur angulaire donné, un témoin 700 pour capteur, par exemple pour capteur optique. Ce témoin 700 est qualifié de « dent ». La boîte de vitesses comporte, fixe par rapport au carter de la boîte, déporté par rapport à l'axe du barillet, en périphérie de celui-ci, un capteur 800 tout ou rien, par exemple un capteur optique, configuré pour repérer la présence ou le passage du témoin 700 en une position angulaire autour de l'axe de rotation X-X du barillet 100. Le capteur 800 est placé pour repérer une position de référence θ₀ du barillet 100 définie par rapport au carter. La position de référence θ₀ est repérée par le détecteur 800 avec une marge angulaire autour d'elle qui constitue une zone de détection.

La boîte de vitesses comprend de plus une unité centrale 900 (ou processeur) pour contrôler de manière électronique l'actionneur 600.

Du fait de la démultiplication entre l'actionneur et le barillet, l'unité centrale 900 ne connaît pas précisément la position angulaire du barillet 100 à l'allumage du système. L'unité centrale 900 peut néanmoins initialiser le suivi du déplacement angulaire du barillet 100 qui est effectué par le capteur 610 de suivi du déplacement angulaire continu, en initialisant le contenu de la mémoire 910.

L'unité centrale 900 est de plus configurée pour constater si le capteur 800 indique que le barillet de commande 100 est à la position angulaire repérée par le témoin 700.

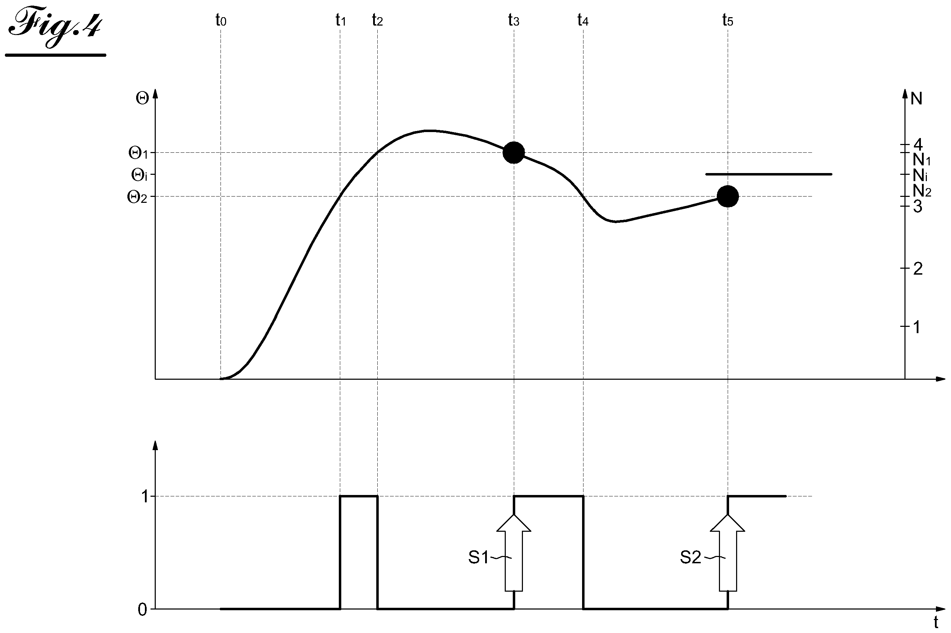

L'unité centrale 900 est également configurée pour commander, lors d'une initialisation du suivi angulaire continu, une rotation du barillet 100 jusqu'à la constatation du fait que le barillet est à la position angulaire repérée par le témoin 700, pour l'initialisation du contenu de la mémoire 910 sur la base des indication fournies par le capteur 800 et le capteur de suivi de déplacement angulaire 610 comme cela sera décrit en relation avec la figure 4.

L'unité centrale 900, ou une autre unité centrale, est enfin configurée pour piloter la rotation du barillet 100 pour enclencher les rapports de vitesses demandés par le conducteur, une fois le suivi en rotation initialisé.

En **figure 4**, on a représenté le processus d'initialisation du suivi de rotation selon l'invention.

Sur la partie supérieure de la figure, sont représentés le positionnement angulaire θ du barillet 100 en ordonnées, sur l'axe de gauche, et le nombre de tours N de l'actionneur 600 correspondant sur l'axe de droite. On rappelle que l'actionneur et le barillet sont reliés par un système de démultiplication.

Sur la partie inférieure de la figure, est représenté l'état du capteur 800, qui est, on le rappelle, un capteur à deux états, soit 0, soit 1.

L'axe des abscisses commun aux deux parties de la figure représente le temps, et une succession chronologiques d'instants t₀, t₁, t₂, t₃, t₄ et t₅.

Lors d'un instant t₀, le barillet 100 est immobile et débute une rotation provoquée par l'actionneur 600 commandé par l'unité centrale 900. Cette rotation se fait dans le sens positif, vers un accroissement de la valeur de l'angle θ. Elle se fait aussi à une vitesse élevée, en utilisant les capacités de l'actionneur 600. A l'instant t₀ et aux instants qui suivent l'état du capteur 800 est égal à 0, le témoin 700 n'étant pas observé par celui-ci.

Lors d'un instant t₁ ultérieur, le capteur 800 commence à observer le témoin 700. Très rapidement ensuite, lors d'un instant t₂, le capteur 800 constate que le témoin 700 n'est plus observé, puisque la rotation qui était rapide s'est poursuivie et que le témoin 700 a dépassé le capteur 800.

À partir de l'instant t₁, l'unité centrale 900 commande le freinage de la rotation du barillet 100, jusqu'à son arrêt et l'inversion de la rotation. L'arrêt et l'inversion sont observés quelques instants après t₂. L'unité centrale commande à partir de cet instant une rotation en sens inverse (vers les valeurs faibles de l'angle θ), à vitesse lente et contrôlée.

En un instant t₃ postérieur à l'instant d'arrêt et d'inversion, le capteur 800 constate que le témoin est à nouveau en face de lui, et son signal repasse à la valeur 1. Le début de ce changement de valeur de signal (front montant de détection) constitue un signal S1 auquel sont associés une valeur ou position angulaire θ₁ (ainsi que le nombre de tours d'actionneur N₁) et l'instant t₃, qui sont pris en compte. Il s'agit là d'une première constatation du fait que le barillet est à la position angulaire prédéterminée θ₀ correspondant au capteur 800. Le suivi de déplacement angulaire par le capteur 610 est mené au moins à partir de l'instant t₃.

La rotation est poursuivie sous le contrôle de l'unité centrale 900 de manière à ce que le capteur 800 dépasse le témoin 700. Il est possible d'accélérer après t₃.

En un instant t₄ le capteur 800 constate que le témoin 700 n'est plus détecté, et le signal passe à 0. La rotation est freinée et inversée, puis une rotation en sens positif (vers les valeurs positives de θ) est menée sous le contrôle de l'unité centrale 900, à faible vitesse, de manière contrôlée.

En un instant t₅, le capteur 800 constate que le témoin 700 est détecté et le signal passe à 1. Le début de ce changement de valeur de signal (front montant de détection) constitue un signal S2 auquel sont associés une valeur ou position angulaire θ₂ (ainsi que le nombre de tours d'actionneur N₂) et l'instant t₅, qui sont pris en compte. Il s'agit là d'une deuxième constatation du fait que le barillet est à la position angulaire prédéterminée θ₀ correspondant au capteur 800.

La référence pour l'initialisation de la mémoire 910 est prise en tenant compte des deux signaux S1 et S2, et du suivi de déplacement angulaire constaté par le capteur 610 entre les instants t₃ et t₅, et notamment en calculant la position moyenne entre les deux points mémorisés (θᵢ, Nᵢ), que l'on considère comme la position de référence. L'unité de contrôle 900 peut maintenant piloter l'actionneur 600 pour faire tourner le barillet jusqu'à une position angulaire donnée, précise, connue de manière absolue.

Au lieu d'utiliser les deux fronts montants de détection, qui permettent de raccourcir la procédure, il est possible d'utiliser les deux fronts descendants de détection (instant t₄, et un instant non représenté postérieur à l'instant t₅) qui permettent alors de définir les deux constatations.

Si à l'allumage du système, le détecteur 800 détecte le témoin 700, le barillet est manoeuvré pour sortir rapidement de la zone de détection. Ainsi, le processus commence entre t₂ et t₃ et est poursuivi comme précédemment.

L'invention n'est pas limitée au mode de réalisation présenté, mais s'étend à toutes les variantes dans le cadre de la portée des revendications.

## Revendications

1. Boîte de vitesses pour véhicule automobile comprenant au moins un moyen de couplage (212, 213, 223, 233) pour coupler un arbre (1000, 1001) à un pignon (310, 311, 410,411) monté autour dudit arbre (1000, 1001), ledit moyen de couplage (212, 213, 223, 233) étant mobile en translation, un barillet de commande (100) mobile en rotation pour commander la translation dudit moyen de couplage (212, 213, 223, 233), et un moyen de suivi (610, 910) de la rotation du barillet (100), ledit moyen de suivi (610, 910) de la rotation du barillet étant configuré pour assurer un suivi en position angulaire (910), **caractérisée en ce que** la boîte comprend un moyen de commande (600, 900) pour commander une rotation rapide du barillet (100) dans un premier sens jusqu'à ce que le barillet (100) dépasse (t₂) une position angulaire prédéterminée (θ₀), puis une rotation lente du barillet en sens opposé au premier sens jusqu'à une constatation (S1, θ₁, t₃) du fait que le barillet (100) est à ladite position angulaire prédéterminée (θ₀), pour initialiser ledit suivi en position angulaire sur la base d'au moins ladite constatation (S1, θ₁, t₃).

2. Boîte de vitesses selon la revendication 1, dans laquelle le barillet est sans butée sur chacune de ses pistes de commande (110, 120, 130).

3. Boîte de vitesses selon la revendication 1 ou la revendication 2, dans laquelle, ladite constatation (S1, θ₁, t₃) étant une première constatation (S1, θ₁, t₃) le moyen de commande (600, 900) est de plus configuré pour commander, après ladite première constatation (S1, θ₁, t₃), un dépassement de ladite position angulaire (θ₀) dans ledit sens opposé, puis une deuxième rotation lente du barillet (100), la deuxième rotation lente étant effectuée dans ledit premier sens jusqu'à une deuxième constatation (S2, θ₂, t₅) du fait que le barillet (100) est à ladite position angulaire prédéterminée (θ₀), pour initialiser ledit suivi en position angulaire sur la base au moins des première et deuxième constatations (S1, θ₁, t₃, S2, θ₂, t₅).

4. Boîte de vitesses selon l'une des revendications 1 à 3, ladite constatation ou première constatation (S1, θ₁, t₃) du fait que le barillet (100) est à ladite position angulaire prédéterminée (θ₀) étant effectuée à l'aide d'un capteur (800) et d'un témoin (700) placé sur une section du barillet (100), le capteur et le témoin étant compris dans la boîte de vitesses, le capteur (800) repérant le témoin (700) pour constater si le barillet de commande (100) est à ladite position angulaire prédéterminée (θ₀).

5. Boîte de vitesses selon la revendication 4, le capteur (800) étant un capteur tout ou rien.

6. Boîte de vitesses selon la revendication 4 ou la revendication 5, le capteur (800) étant fixe vis-à-vis d'un carter de la boîte.

7. Boîte de vitesses selon l'une des revendications 4 à 6, l'initialisation du suivi étant effectuée sur la base de l'apparition (S1, S2) d'un signal de détection par le capteur (800), ou sur la base de la disparition d'un signal de détection par le capteur (800).

8. Boîte de vitesses selon l'une des revendications 1 à 7, comprenant un actionneur (600) pour actionner le barillet (100) en rotation, le moyen de suivi (610, 910) de la rotation du barillet (100) comprenant un moyen de suivi du déplacement angulaire (610) dans ledit actionneur (600).

9. Boîte de vitesses selon l'une des revendications 1 à 8, comprenant un moyen de démultiplication entre un actionneur (600) en rotation pour actionner le barillet en rotation et le barillet (100).

10. Procédé d'initialisation d'un suivi de déplacement angulaire d'un barillet de commande (100) de boîte de vitesses pour véhicule automobile, la boîte comprenant un moyen de couplage (212, 213, 223, 233) pour coupler un arbre (1000, 1001) à un pignon (310, 311, 410,411) monté autour dudit arbre (1000, 1001), ledit moyen de couplage (212, 213, 223, 233) étant mobile en translation, un barillet de commande (100) mobile en rotation pour commander la translation dudit moyen de couplage (212, 213, 223, 233), et un moyen de suivi (610, 910) de la rotation du barillet (100), **caractérisé en ce que** le procédé comprend une commande en rotation rapide du barillet (100) dans un premier sens jusqu'à ce que le barillet (100) dépasse une position angulaire prédéterminée (θ₀), puis une commande en rotation lente du barillet (100) en sens inverse jusqu'à une constatation (S1, θ₁, t₃) du fait que le barillet (100) est à ladite position angulaire prédéterminée (θ₀), pour initialiser un suivi en position angulaire sur la base d'au moins ladite constatation (S1, θ₁, t₃).

11. Programme informatique, qui quand il est mis en oeuvre par un processeur (900) conduit à la mise en oeuvre des étapes du procédé selon la revendication 10.

## Patentansprüche

1. Schaltgetriebe für Kraftfahrzeug, das mindestens ein Kupplungsmittel (212, 213, 223, 233) zum Kuppeln einer Welle (1000, 1001) mit einem Ritzel (310, 311, 410, 411), das um die Welle (1000, 1001) montiert ist, umfasst, wobei das Kupplungsmittel (212, 213, 223, 233) in Verschiebung beweglich ist, eine Schalttrommel (100), die in Drehung beweglich ist, um die Verschiebung des Kupplungsmittels (212, 213, 223, 233) zu steuern, und ein Folgemittel (610, 910) der Drehung der Trommel (100), wobei das Folgemittel (610, 910) der Drehung der Trommel konfiguriert ist, um ein Folgen in Winkelposition (910) sicherzustellen, **dadurch gekennzeichnet, dass** das Schaltgetriebe ein Steuermittel (600, 900) zum Steuern einer schnellen Drehung der Trommel (100) in eine erste Richtung umfasst, bis die Trommel (100) eine vorbestimmte Winkelposition (θ₀) überschreitet (t₂), dann eine langsame Drehung der Trommel in entgegengesetzte Richtung zu der ersten Richtung, bis zum Feststellen (S1, θ₁, t₃) der Tatsache, dass die Trommel (100) an der vorbestimmten Winkelposition (θ₀) ist, um das Folgen in Winkelposition auf der Basis mindestens der Feststellung (S1, θ₁, t₃) zu initialisieren.

2. Schaltgetriebe nach Anspruch 1, wobei die Trommel auf jeder ihrer Steuerbahnen (110, 120, 130) ohne Anschlag ist.

3. Schaltgetriebe nach Anspruch 1 oder Anspruch 2, wobei, da die Feststellung (S1, θ₁, t₃) eine erste Feststellung (S1, θ₁, t₃) ist, das Steuermittel (600, 900) außerdem konfiguriert ist, um nach der ersten Feststellung (S1, θ₁, t₃) eine Überschreitung der Winkelposition (θ₀) in die entgegengesetzte Richtung zu steuern, dann eine zweite langsame Drehung der Trommel (100), wobei die zweite langsame Drehung in die erste Richtung bis zu einer zweiten Feststellung (S2, θ₂, t₅) der Tatsache, dass die Trommel (100) an der vorbestimmten Winkelposition (θ₀) ist, ausgeführt wird, um das Folgen in Winkelposition auf der Basis mindestens der ersten und zweiten Feststellung (S1, θ₁, t₃, S2, θ₂, t₅) zu initialisieren.

4. Schaltgetriebe nach einem der Ansprüche 1 bis 3, wobei die Feststellung oder erste Feststellung (S1, θ₁, t₃) der Tatsache, dass die Trommel (100) an der vorbestimmten Winkelposition (θ₀) ist, mit Hilfe eines Sensors (800) und eines Bezugselements (700), das auf einem Abschnitt der Trommel (100) platziert ist, ausgeführt wird, wobei der Sensor und das Bezugselement in dem Schaltgetriebe enthalten sind, wobei der Sensor (800) das Bezugselement (700) erfasst, um festzustellen, ob die Schalttrommel (100) an der vorbestimmten Winkelposition (θ₀) ist.

5. Schaltgetriebe nach Anspruch 4, wobei der Sensor (800) ein Ein-/Aus-Sensor ist.

6. Schaltgetriebe nach Anspruch 4 oder Anspruch 5, wobei der Sensor (800) in Bezug auf ein Gehäuse des Schaltgetriebes stationär ist.

7. Schaltgetriebe nach einem der Ansprüche 4 bis 6, wobei die Initialisierung des Folgens auf der Basis des Erscheinens (S1, S2) eines Signals des Erfassens durch den Sensor (800) oder auf der Basis des Verschwindens eines Signals des Erfassens durch den Sensor (800) erfolgt.

8. Schaltgetriebe nach einem der Ansprüche 1 bis 7, das einen Aktuator (600) zum Betätigen der Trommel (100) in Drehung umfasst, wobei das Mittel zum Folgen (610, 910) der Drehung der Trommel (100) ein Mittel zum Folgen der Winkelverschiebung (610) in dem Aktuator (600) umfasst.

9. Schaltgetriebe nach einem der Ansprüche 1 bis 8, das ein Untersetzungsmittel zwischen einem Aktuator (600) in Drehung zum Betätigen der Trommel in Drehung und der Trommel (100) umfasst.

10. Initialisierungsverfahren einer Winkelverschiebungsverfolgung einer Schalttrommel (100) eines Schaltgetriebes für Kraftfahrzeug, wobei das Schaltgetriebe ein Kupplungsmittel (212, 213, 223, 233) umfasst, um eine Welle (1000, 1001) mit einem Ritzel (310, 311, 410, 411), das um die Welle (1000, 1001) montiert ist, zu kuppeln, wobei das Kupplungsmittel (212, 213, 223, 233) in Verschiebung beweglich ist, eine Schalttrommel (100), die in Drehung beweglich ist, um die Verschiebung des Kupplungsmittels (212, 213, 223, 233) zu steuern, und ein Mittel (610, 910) zum Folgen der Trommel (100), **dadurch gekennzeichnet, dass** das Verfahren eine Steuerung in schneller Drehung der Trommel (100) in eine erste Richtung umfasst, bis die Trommel (100) eine vorbestimmte Winkelposition (θ₀) überschreitet, dann eine Steuerung in langsamer Drehung der Trommel (100) in umgekehrte Richtung bis zu einer Feststellung (S1, θ₁, t₃) der Tatsache, dass die Trommel (100) an der vorbestimmten Winkelposition (θ₀) ist, umfasst, um ein Folgen in Winkelposition auf der Basis mindestens der Feststellung (S1, θ₁, t₃) zu initialisieren.

11. Computerprogramm, das, wenn es von einem Prozessor (900) umgesetzt wird, zur Umsetzung der Schritte des Verfahrens nach Anspruch 10 führt.

## Claims

1. A motor vehicle gearbox including at least one coupling means (212, 213, 223, 233) for coupling a shaft (1000, 1001) to a gear (310, 311, 410, 411) mounted about said shaft (1000, 1001), said coupling means (212, 213, 223, 233) being movable in translation, a rotatable control cylinder (100) for controlling the translation of said coupling means (212, 213, 223, 233), and a means (610, 910) for tracking the rotation of the cylinder (100), said tracking means (610, 910) of the rotation of the cylinder being configured so as to ensure a tracking in angular position (910), **characterized in that** the gearbox includes a control means (600, 900) for controlling a rapid rotation of the cylinder (100) in a first direction until the cylinder (100) passes (t₂) a predetermined angular position (θ₀), then a slow rotation of the cylinder in the opposite direction to the first direction, until it is observed (S1, θ₁, t₃) that the cylinder (100) is in said predetermined angular position (θ₀), so as to initialize said angular position tracking on the basis of at least said observation (S1, θ₁, t₃).

2. The gearbox according to Claim 1, in which the cylinder is without a stop on each of its control tracks (110, 120, 130).

3. The gearbox according to Claim 1 or Claim 2, in which, said observation (S1, θ₁, t₃) being a first observation (S1, θ₁, t₃), the control means (600, 900) is in addition configured to control, after said first observation (S1, θ₁, t₃), a passing of said angular position (θ₀) in said opposite direction, then a second slow rotation of the cylinder (100), the second slow rotation being carried out in said first direction until a second observation (S2, θ₂, t₅) that the cylinder (100) is in said predetermined angular position (θ₀), so as to initialize said angular position tracking on the basis of at least the first and second observations (S1, θ₁, t₃, S2, θ₂, t₅).

4. The gearbox according to one of Claims 1 to 3, said observation or first observation (S1, θ₁, t₃) that the cylinder (100) is in said predetermined angular position (θ₀) being carried out by means of a sensor (800) and an indicator (700) placed on a section of the cylinder (100), the sensor and the indicator being comprised in the gearbox, the sensor (800) detecting the indicator (700) to observe whether the control cylinder (100) is in said predetermined angular position (θ₀).

5. The gearbox according to Claim 4, the sensor (800) being an all or nothing sensor.

6. The gearbox according to Claim 4 or Claim 5, the sensor (800) being fixed with respect to a casing of the gearbox.

7. The gearbox according to one of Claims 4 to 6, the initializing of the tracking being carried out on the basis of the appearing (S1, S2) of a detection signal by the sensor (800), or on the basis of the disappearing of a detection signal by the sensor (800) .

8. The gearbox according to one of Claims 1 to 7, including an actuator (600) to actuate the cylinder (100) in rotation, the tracking means (610, 910) of the rotation of the cylinder (100) including a tracking means of the angular displacement (610) in said actuator (600).

9. The gearbox according to one of Claims 1 to 8, including a reduction means between an actuator (600) in rotation to actuate the cylinder in rotation and the cylinder (100).

10. A method for initializing a tracking of the angular displacement of a control cylinder (100) of a gearbox for a motor vehicle, the gearbox including a coupling means (212, 213, 223, 233) for coupling a shaft (1000, 1001) to a gear (310, 311, 410, 411) mounted about said shaft (1000, 1001), said coupling means (212, 213, 223, 233) being movable in translation, a control cylinder (100) movable in rotation for controlling the translation of said coupling means (212, 213, 223, 233), and a tracking means (610, 910) of the rotation of the cylinder (100), **characterized in that** the method includes a rapid rotation control of the cylinder (100) in a first direction until the cylinder (100) passes a predetermined angular position (θ₀), then a slow rotation control of the cylinder (100) in the opposite direction until it is observed (S1, θ₁, t₃)that the cylinder (100) is in said predetermined angular position (θ₀), so as to initialize an angular position tracking on the basis of at least said observation (S1, θ₁, t₃).

11. A computer program which, when it is implemented by a computer (900), leads to the implementation of the steps of the process according to Claim 10.
